# FASCICULE DE BREVET EUROPEEN

(11) **EP 3 719 374 B1**
(45) Date de publication et mention de la délivrance du brevet: **08.05.2024**
(21) Numéro de dépôt: 20166555.1
(22) Date de dépôt: 30.03.2020
(51) Int. Cl.: F16L 27/08, E21B 17/01, E21B 17/05, E21B 43/01, F16J 15/00, F16J 15/46, F16L 27/093

(54) **DISPOSITIF JOINT TOURNANT CONFIGURE POUR EQUIPER UNE INSTALLATION D'EXPLOITATION DE FLUIDES, NOTAMMENT SUR UNE PLATEFORME OFFSHORE**
DREHGELENKVORRICHTUNG, DIE FÜR DIE AUSSTATTUNG EINER ANLAGE ZUR NUTZUNG VON FLUIDEN GEEIGNET IST, INSBESONDERE AUF EINER OFFSHORE-PLATTFORM
ROTARY JOINT DEVICE CONFIGURED TO EQUIP AN INSTALLATION FOR EXPLOITING FLUIDS, IN PARTICULAR ON AN OFFSHORE PLATFORM

(30) Priorité: 01.04.2019 FR 1903463
(43) Date de publication de la demande: 07.10.2020
(73) Titulaire: ETI Group, 13420 Gémenos (FR)
(72) Inventeur: SAINT-MICHEL, Laurent, 13400 AUBAGNE (FR); EBLE, Jean-Claude, 06510 GATTIERES (FR)
(74) Mandataire: Santarelli

(56) Documents cités:
- EP-A1- 2 233 813
- US-A- 4 214 760
- US-A- 4 561 679
- US-A- 5 538 296
- US-A- 6 073 777

## Description

### Domaine technique de l'invention

L'invention concerne les dispositifs joint tournant configurés pour équiper des installations d'exploitation de fluides, par exemple d'hydrocarbures, notamment sur des plateformes du type offshore.

En particulier, l'invention vise un dispositif joint tournant pourvu d'un ou plusieurs organes d'étanchéité dynamique et d'au moins un dispositif de protection du ou des organes d'étanchéité dynamique.

L'invention vise également une installation d'exploitation de fluides notamment sur une plateforme du type offshore, comportant au moins un tel dispositif joint tournant.

### Etat de la technique

Les dispositifs joint tournant installés dans des installations sous pression peuvent trouver une application dans les navires de production pétrolières du domaine de l'offshore, permettant l'exploitation de champs d'hydrocarbures en mer. Des unités flottantes de production, de stockage et de déchargement peuvent être formées par un navire qui est mobile, du fait de son environnement, autour d'une tourelle d'amarrage qui est géostationnaire. Le navire peut être assujetti temporairement à la tourelle. Les installations peuvent comporter des conduits qui forment un réseau de canalisations subaquatiques et qui permettent une communication fluidique pour le transfert d'un fluide entre la tourelle et le navire.

Pour assurer l'étanchéité entre le navire et la tourelle et ainsi assurer l'intégrité du transfert de fluide, les dispositifs joint tournant sont pourvus d'une première partie, dite fixe, assujettie à la tourelle et d'une deuxième partie, dite mobile, assujettie au navire. La deuxième partie des dispositifs joint tournant est donc mobile en rotation par rapport à la première partie des dispositifs joint tournant. Les dispositifs joint tournant sont en outre pourvus de plusieurs organes d'étanchéité dynamique disposés dans des espaces ménagés entre la première partie fixe et la deuxième partie mobile des dispositifs joint tournant.

De tels organes d'étanchéité dynamique peuvent comporter par exemple des lèvres ayant pour fonction d'assurer l'étanchéité face au fluide.

Dans des installations telle que décrites ci-dessus, le fluide formé d'hydrocarbures extraits du champ pétrolier sous-marin et véhiculés par les conduites peut être chargés en sable ou en débris de forage qui peuvent détériorer prématurément les dispositifs joint tournant et notamment les lèvres des organes d'étanchéité dynamique.

Le brevet américain US 6,073,777 décrit un dispositif joint tournant configuré pour équiper une installation offshore d'exploitation de fluides, du type hydrocarbure, chargés de sable. Le dispositif joint tournant comporte une première partie, une deuxième partie mobile par rapport à la première partie, une chambre de transfert ménagée entre la première partie et la deuxième partie pour permettre le transfert du fluide au travers du dispositif joint tournant, et au moins un espace ménagé également entre la première partie et la deuxième partie pour les maintenir à distance et permettre le mouvement de rotation. Cet espace s'étend au moins depuis la chambre de transfert, le long des première et deuxième parties, vers l'extérieur du dispositif joint tournant, et ce dernier comporte des organes d'étanchéité dynamique logés à l'intérieur de cet espace.

Le dispositif joint tournant décrit dans le brevet américain US 6,073,777 comporte en outre un dispositif de protection des organes d'étanchéité dynamique, formé principalement d'une première protubérance qui saille de la première partie à l'intérieur de la chambre de transfert et d'une deuxième protubérance qui saille de la deuxième partie à l'intérieur de la chambre de transfert, les première et deuxième protubérances étant agencées de sorte à se chevaucher pour former une barrière, comme une chicane, dans la chambre de transfert et en amont de l'espace dans lequel sont logés les organes d'étanchéité dynamique. En d'autres termes, les première et deuxième protubérances forment un obstacle à la propagation du sable dans l'espace et en direction des organes d'étanchéité dynamique.

La demande de brevet EP 2 233 813 concerne un dispositif joint tournant pour les systèmes d'entrainement de machines de construction. Il y a des éléments d'étanchéité disposés dans des gorges au niveau d'un espace d'écartement ménagé entre deux parties mobiles qui sont lubrifiées.

Le brevet US 4,561,679 décrit un système de réduction de pression pourvu d'une pluralité de joints qui se succèdent pour protéger des joints d'étanchéité logés entre une partie fixe et une partie mobile d'un dispositif par exemple utilisé sur une plateforme offshore.

Le brevet US 5,538,296 divulgue un dispositif qui permet d'assembler des sections de tuyaux rigides, notamment dans le domaine de l'industrie pétrolière et dans le chargement de navires. Il s'agit d'un manchon de connexion dont une première partie est montée sur un premier tuyau et une deuxième partie est montée sur un deuxième tuyau. La deuxième partie est plutôt un élément femelle tandis que la première partie est plutôt un élément mâle. Des joints et des patins d'usure sont prévus à l'interface entre les deux parties. Ces patins ont pour fonction de mieux aligner la première partie par rapport à la deuxième partie au montage et peuvent servir de verrou. Il est en outre décrit que ces patins permettent de réduire l'usure des joints.

### Exposé de l'invention

L'invention concerne un dispositif joint tournant configuré pour équiper une installation d'exploitation de fluides, présentant des performances améliorées par rapport au dispositif de l'art antérieur susmentionné, tout en étant simple, commode et économique.

L'invention a ainsi pour objet, sous un premier aspect, un dispositif joint tournant configuré pour équiper une installation d'exploitation de fluides, par exemple un hydrocarbure et notamment sur une plateforme offshore, comportant une première partie annulaire, une deuxième partie annulaire mobile en rotation par rapport à ladite première partie annulaire, au moins une chambre de transfert au moins partiellement ménagée dans ladite première partie annulaire et/ou dans ladite deuxième partie annulaire pour permettre le transfert dudit fluide au travers dudit dispositif joint tournant, au moins un espace d'écartement situé entre ladite première partie annulaire et ladite deuxième partie annulaire et débouchant dans ladite au moins une chambre de transfert, ledit au moins un espace d'écartement étant prévu pour permettre la rotation desdites première et deuxième parties annulaires entre elles, au moins un organe d'étanchéité dynamique logé au moins partiellement à l'intérieur dudit au moins un espace d'écartement et prévu pour l'étancher, ainsi qu'un dispositif de protection dudit au moins un organe d'étanchéité dynamique ; caractérisé en ce que ledit dispositif de protection comporte au moins un organe déflecteur logé au moins partiellement dans ledit au moins un espace d'écartement et au moins une cavité de récupération ménagée dans au moins l'une desdites première et deuxième parties annulaires et débouchant dans ledit au moins un espace d'écartement, ledit dispositif de protection étant configuré de sorte que, lorsque ledit fluide admis dans ladite au moins une chambre de transfert s'écoule vers ledit au moins un espace d'écartement dans lequel est logé ledit au moins un organe d'étanchéité dynamique, ledit fluide est guidé par ledit au moins un organe déflecteur directement dans ladite au moins une cavité de récupération pour protéger ledit au moins un organe d'étanchéité dynamique de débris que peut comporter ledit fluide.

Le dispositif joint tournant selon l'invention permet d'assurer de manière simple et commode une protection du ou des organes d'étanchéité dynamique qu'il comporte dans son espace d'écartement.

En effet, c'est parce que les première et deuxième parties annulaires sont mobiles en rotation entre elles qu'il est nécessaire de ménager l'espace d'écartement et c'est du fait de cet espace qu'il est nécessaire d'étancher via des organes d'étanchéité dynamique. Or, les débris que peut comporter le fluide peuvent détériorer ces organes d'étanchéité dynamique s'ils cheminent dans l'espace d'écartement jusqu'à ces organes d'étanchéité dynamique.

L'agencement du dispositif de protection, et en particulier de son organe déflecteur et de la cavité de récupération associée à cet organe déflecteur, directement à l'intérieur de l'espace d'écartement, permet de former une barrière de protection dédiée aux organes d'étanchéité dynamique.

En d'autres termes, cette barrière de protection qui est formée par l'organe déflecteur et la cavité de récupération associée obstrue seulement l'espace d'écartement, sans obstruer la chambre de transfert. Cette barrière de protection ne gêne donc pas l'écoulement du fluide dans la chambre de transfert et au travers desdites première et deuxième parties annulaires.

Au surplus, l'agencement du dispositif de protection dans l'espace d'écartement est particulièrement commode en ce qu'il n'influe pas sur l'assemblage du dispositif joint tournant, au contraire du dispositif de l'art antérieur susmentionné où le chevauchement d'une portion de la première partie annulaire avec une autre portion de la deuxième partie annulaire peut nécessiter des modifications substantielles de la géométrie du dispositif joint tournant pour permettre son assemblage.

Des caractéristiques préférées, simples, commodes et économiques du dispositif selon l'invention sont présentées ci-après.

Ladite au moins une cavité de récupération peut être située immédiatement après ledit au moins un organe déflecteur et avant ledit au moins un organe d'étanchéité dynamique.

En d'autres termes, la cavité de récupération est ménagée entre l'organe déflecteur et l'organe d'étanchéité dynamique, et plus près de l'organe déflecteur que de l'organe d'étanchéité dynamique.

Ledit au moins un organe déflecteur peut s'étendre dans ledit au moins un espace d'écartement entre ladite au moins une chambre de transfert et ledit au moins un organe d'étanchéité dynamique.

Ladite au moins une cavité de récupération peut être formée dans l'une desdites première et deuxième parties annulaires et ledit au moins un organe déflecteur peut s'étendre depuis l'autre desdites première et deuxième parties annulaires.

Le dispositif joint tournant peut comporter un dispositif de nettoyage configuré pour évacuer des débris que peut comporter ledit fluide et qui sont guidés par ledit au moins un organe déflecteur et accumulés dans ladite au moins une cavité de récupération.

Ledit dispositif de nettoyage peut être pourvu d'au moins un conduit ménagé dans l'une desdites première et deuxième parties annulaires et débouchant dans ladite au moins une cavité de récupération au niveau dudit au moins un espace d'écartement, ledit au moins un conduit étant agencé de sorte que lesdits débris sont évacués par gravité et/ou ledit dispositif de nettoyage peut comporter en outre un système d'aspiration externe auxdites première et deuxième parties annulaires et raccordé audit au moins un conduit.

Ledit au moins un organe déflecteur peut être pourvu d'un doigt saillant à l'intérieur dudit au moins un espace d'écartement et/ou d'une languette flexible.

Ledit au moins un organe déflecteur peut être configuré pour admettre plusieurs positions, dont une position de travail dans laquelle ledit au moins un organe déflecteur forme une barrière dans ledit au moins un espace d'écartement et guide lesdits débris que peut comporter ledit fluide dans ladite au moins une cavité de récupération, ainsi qu'une position de montage dans laquelle ledit au moins un organe déflecteur est à proximité immédiate de l'une desdites première et deuxième parties annulaires et à distance de l'autre desdites première et deuxième parties annulaires, n'obstruant ainsi pas ledit au moins un espace d'écartement.

Ledit au moins un organe déflecteur peut être commandable entre une configuration déployée dans laquelle il admet ladite position de travail et une configuration rétractée dans laquelle il admet ladite position de montage.

Ledit dispositif joint tournant comporte un dispositif d'équilibrage de pressions configuré pour assurer un équilibrage de pressions entre ladite chambre de transfert et ledit espace d'écartement, ledit dispositif d'équilibrage de pressions étant pourvu d'un réseau de conduits, dont au moins un conduit passant par un filtre et/ou par un échangeur à piston au moyens d'au moins une vanne dédiée et débouchant dans ledit espace d'écartement entre ledit dispositif de protection et ledit au moins un organe d'étanchéité, en aval de ladite cavité de récupération.

L'invention a aussi pour objet, sous un deuxième aspect, une installation d'exploitation de fluides, par exemple un hydrocarbure et notamment sur une plateforme offshore, comportant au moins un dispositif joint tournant tel que décrit ci-dessus, avec ladite première partie annulaire dudit dispositif joint tournant qui est assujettie à une tourelle d'amarrage fixe de ladite installation et ladite deuxième partie annulaire dudit dispositif joint tournant qui est assujettie à un navire mobile de ladite installation.

### Brève description des figures

On va maintenant poursuivre l'exposé de l'invention par la description d'exemples de réalisation, donnée ci-après à titre illustratif et non limitatif, en référence aux dessins annexés.
La figure 1 représente schématiquement et partiellement une installation d'exploitation de fluides sur une plateforme offshore, pourvue d'un navire, d'une tourelle d'amarrage, d'un réseau de canalisations subaquatiques permettant une communication fluidique pour le transfert du fluide entre la tourelle et le navire, et d'un dispositif joint tournant assurant l'étanchéité entre le navire et la tourelle et l'intégrité du transfert de fluide.
La figure 2 est une vue de dessus du dispositif joint tournant de l'installation illustrée sur la figure 1.
La figure 3 est une vue partielle en coupe du dispositif joint tournant, repérée III-III sur la figure 2.
La figure 4 est une vue de détail de la figure 3, montrant une portion inférieure du dispositif joint tournant.
La figure 5 est une autre vue de détail de la figure 3 montrant une portion supérieure du dispositif joint tournant.
La figure 6 reprend les éléments des figures 4 et 5, de manière plus schématique, et montre au surplus un dispositif d'équilibrage de pressions dans le dispositif joint tournant.

### Description détaillée

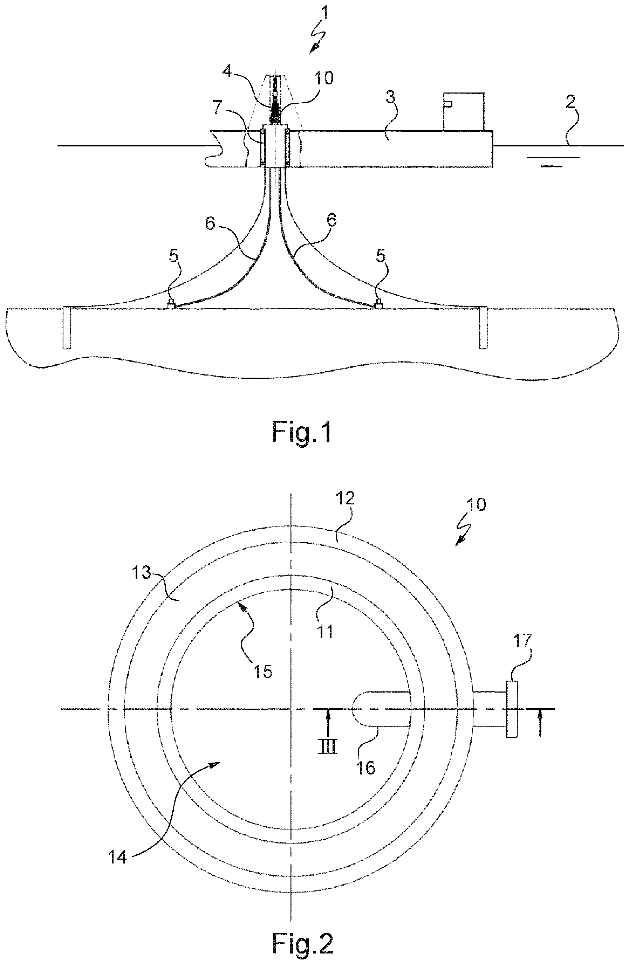

La figure 1 illustre une installation d'exploitation de fluides 1 sur une plateforme offshore, permettant l'exploitation de champs d'hydrocarbures en mer 2.

Cette installation 1, aussi appelée unité flottante de production, de stockage et de déchargement, peut être pourvue d'un navire 3 qui est mobile, du fait de son environnement formé par la mer 2, et d'une tourelle d'amarrage 4 qui est géostationnaire et autour duquel le navire 3 est mobile.

La tourelle d'amarrage 4 peut par exemple être assujettie mécaniquement au fond de la mer 2 via des ancres sous-marines 5.

Le navire 3 peut être mobile vis-à-vis de la tourelle d'amarrage 4 par le biais d'un mécanisme à roulements 7.

L'installation 1 peut être pourvu de conduits 6 qui forment un réseau de canalisations subaquatiques permettant une communication fluidique pour le transfert du fluide entre la tourelle d'amarrage 4 et le navire 3.

Le fluide circulant dans ces conduits 6 provient du fond de la mer 2 et peut être chargé par exemple en sable ou en débris de forage.

L'installation 1 comporte un dispositif joint tournant 10 assurant l'étanchéité entre le navire 3 et la tourelle d'amarrage 4 et l'intégrité du transfert de fluide.

Le dispositif joint tournant 10 peut être formé d'un joint tournant (« swivel device » en terminologie anglo-saxonne) ou d'un empilement de tels joints (« swivel stack device » en terminologie anglo-saxonne).

Ainsi qu'illustré sur la figure 2, un tel dispositif joint tournant 10 est globalement annulaire et comporte une première partie annulaire 11, dite fixe, qui est configurée pour être assujettie à la tourelle d'amarrage 4, ainsi qu'une deuxième partie annulaire 12, dite mobile, qui est configurée pour être assujettie au navire 3.

Dans l'exemple décrit, la deuxième partie annulaire 12 est mobile en rotation par rapport à la première partie annulaire 11, par l'intermédiaire d'un organe à roulements 13 au moins partiellement interposé entre les première et deuxième parties annulaires 11 et 12.

Le dispositif joint tournant 10 présente un espace interne 14 défini ici par une surface interne 15 de la première partie annulaire 11.

L'installation 1 comporte en outre un conduit de transfert 16 raccordé, directement ou indirectement, à au moins un des conduits subaquatiques 6.

Le conduit de transfert 16 entre dans le dispositif joint tournant 10 par son espace interne 14 et débouche à l'extérieur du dispositif joint tournant 10 par un raccord de sortie 17.

Le conduit de transfert 16 traverse ainsi le dispositif joint tournant 10 en entrant dans la première partie annulaire 11 et en sortant par la deuxième partie annulaire 12.

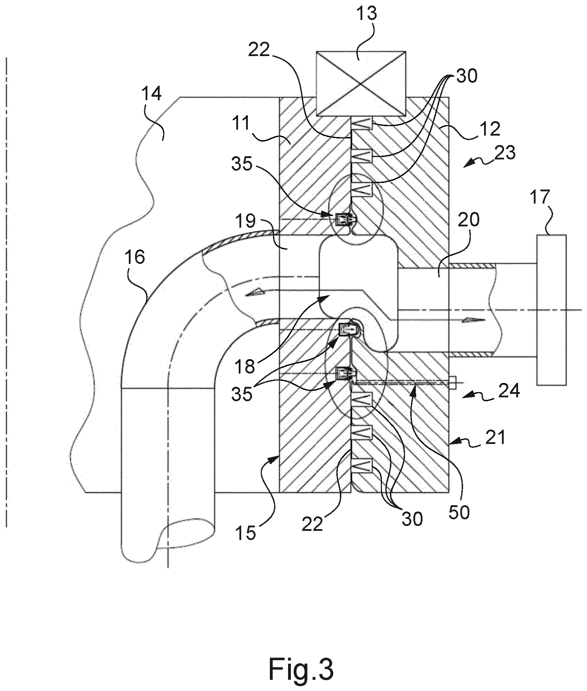

La figure 3 montre plus en détail le chemin fluidique au travers du dispositif joint tournant 10 et la coopération entre les première et deuxième parties annulaires 11 et 12.

Le dispositif joint tournant 10 est pourvu d'une chambre de transfert 18 formée partiellement par un premier orifice 19 ménagé dans la première partie annulaire 11 et par un deuxième orifice 20 ménagé dans la deuxième partie annulaire 12 et au moins partiellement en regard du premier orifice 19.

La chambre de transfert 18 est ici annulaire, ou toroïdale.

Le premier orifice 19 débouche au niveau de la surface interne 15 de la première partie annulaire 11 dans une première portion du conduit de transfert 16 située dans l'espace interne 14 du dispositif joint tournant 10 et qui est raccordée aux conduits subaquatiques 6.

Le deuxième orifice 20 débouche au niveau d'une surface externe 21 de la deuxième partie annulaire 12 dans une deuxième portion du conduit de transfert 16 située à l'extérieur du dispositif joint tournant 10 et qui comporte le raccord de sortie 17.

Une flèche illustrée sur la figure 3 montre le chemin fluidique emprunté globalement par le fluide venant des conduits 6 et acheminé par le conduit de transfert 16 en traversant les première et deuxième parties annulaire 11 et 12 du dispositif joint tournant 10, jusqu'au raccord de sortie 17.

Le dispositif joint tournant 10 est en outre pourvu d'un espace d'écartement 22 situé entre la première partie annulaire 11 et la deuxième partie annulaire 12.

L'espace d'écartement 22 est prévu pour permettre la rotation de la deuxième partie annulaire 12 par rapport à la première partie annulaire 11.

Dans l'exemple décrit, l'espace d'écartement 22 est interrompu par la chambre de transfert 18.

Ainsi, sur une portion supérieure 23 du dispositif joint tournant 10, l'espace d'écartement 22 s'étend depuis l'organe à roulement 13 jusqu'à déboucher dans la chambre de transfert 18 ; tandis que sur une portion inférieure 24 du dispositif joint tournant 10, l'espace d'écartement 22 débouche à une extrémité dans la chambre de transfert 18 et débouche à une extrémité opposée à l'extérieur du dispositif joint tournant 10.

La chambre de transfert 18 est ici interposée entre les portions supérieure et inférieure 23 et 24.

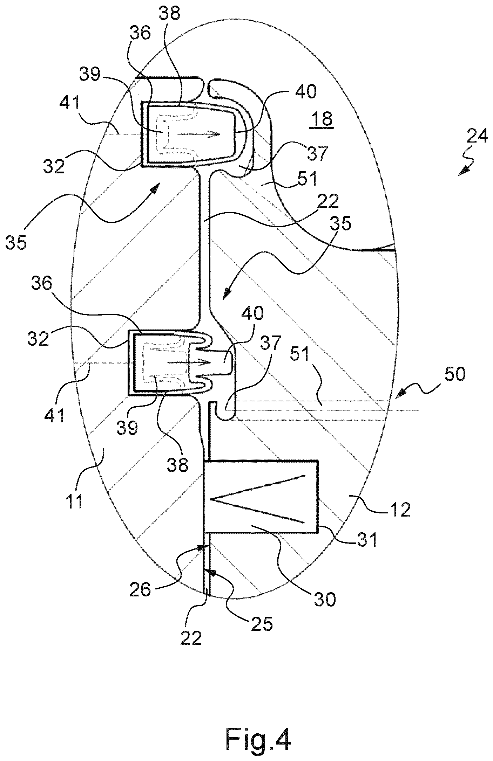

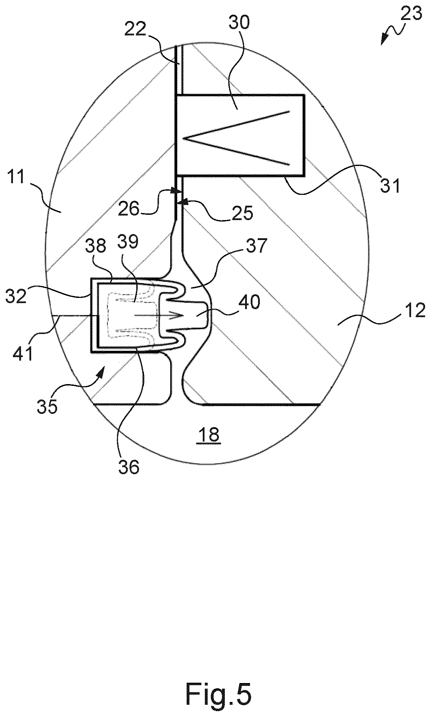

En particulier, l'espace d'écartement 22 est ménagé entre une surface externe 25 de la première partie annulaire 11, laquelle surface externe 25 est opposée à sa surface interne 15, et une surface interne 26 de la deuxième partie annulaire 12, laquelle surface interne 26 est opposée à sa surface externe 21 (voir figures 4 et 5).

Le dispositif joint tournant 10 comporte des organes d'étanchéité dynamique 30 logés au moins partiellement à l'intérieur de l'espace d'écartement 22, dans les portions supérieure et inférieure 23 et 24 du dispositif joint tournant 10.

Ces organes d'étanchéité dynamique 30 sont prévus pour étancher l'espace d'écartement 22.

Ces organes d'étanchéité dynamique 30 peuvent comporter par exemple des lèvres ayant pour fonction d'assurer l'étanchéité face au fluide.

Dans l'exemple décrit, un trois organes d'étanchéité dynamique 30 sont logés au moins partiellement à l'intérieur de l'espace d'écartement 22 dans la portion supérieure 23 du dispositif joint tournant 10 et trois organes d'étanchéité dynamique 30 sont logés au moins partiellement à l'intérieur de l'espace d'écartement 22 dans la portion inférieure 24 du dispositif joint tournant 10.

Le dispositif joint tournant 10 comporte en outre plusieurs dispositifs de protection 35 des organes d'étanchéité dynamique 30.

Dans l'exemple décrit, un dispositif de protection 35 est logé au moins partiellement à l'intérieur de l'espace d'écartement 22 dans la portion supérieure 23 du dispositif joint tournant 10 et deux dispositifs de protection 35 sont logés au moins partiellement à l'intérieur de l'espace d'écartement 22 dans la portion inférieure 24 du dispositif joint tournant 10.

Le dispositif joint tournant 10 peut comporter un dispositif de nettoyage 50 configuré pour évacuer des débris que peut comporter ledit fluide (voir ci-après).

On va décrire plus en détail en référence aux figures 4 et 5 l'agencement des organes d'étanchéité dynamique 30 et des dispositifs de protection 35 dans l'espace d'écartement 22.

Dans la portion inférieure 24 du dispositif joint tournant 10 (figure 4), chaque organe d'étanchéité dynamique 30 est disposé dans un logement 31 formant un espace dédié, lequel logement 31 est ménagé par exemple ici dans la deuxième partie annulaire 12 et débouche dans l'espace d'écartement 22.

Chaque organe d'étanchéité dynamique 30 saille de la surface interne 26 de la deuxième partie annulaire 12 et vient en appui contre la surface externe 25 de la première partie annulaire 11, en traversant radialement l'espace d'écartement 22.

Chaque dispositif de protection 35 comporte un organe déflecteur 36 qui est disposé dans un logement 32 formant un espace dédié, lequel logement 32 est ménagé par exemple ici dans la première partie annulaire 11 et débouche dans l'espace d'écartement 22.

Dans l'exemple décrit, chaque dispositif de protection 35 comporte en outre une cavité de récupération 37 ménagée ici dans la deuxième partie annulaire 12, du côté de sa surface interne 26.

Chaque cavité de récupération 37 débouche ainsi directement dans l'espace d'écartement 22.

Chaque cavité de récupération 37 est ici située immédiatement après l'organe déflecteur 36 respectif et avant l'organe d'étanchéité dynamique 30.

Chaque organe déflecteur 36 s'étend ici dans l'espace d'écartement 22 entre la chambre de transfert 18 et l'organe d'étanchéité dynamique 30.

Les organes déflecteurs et plus généralement les dispositifs de protection ne saillent pas dans la chambre de transfert 18.

Dans l'exemple décrit, chaque organe déflecteur 36 est pourvu d'un corps 38 définissant une chambre de rétractation 39 et d'un doigt 40 qui est configuré pour être rétractable dans la chambre de rétractation 39 et déployable en saillie à l'intérieur de l'espace d'écartement 22 en direction de la surface interne 26 de la deuxième partie annulaire 12.

Autrement dit, chaque organe déflecteur 36 est commandable, ici par le biais d'un organe de commande 41 relié à la chambre de rétractation 39, entre une configuration déployée dans laquelle il admet une position dite de travail et une configuration rétractée dans laquelle il admet une position dite de montage.

L'organe de commande 41 peut par exemple être électrique, pneumatique ou bien hydraulique.

Le doigt 40 des organes déflecteurs 36 peut présenter différentes formes, par exemple en fonction de la forme de la cavité de récupération 37 située immédiatement après l'organe déflecteur 36 respectif.

En fonction de la forme du doigt 40, celui-ci peut être totalement ou seulement partiellement déployé dans l'espace d'écartement 22 et/ou rétracté dans la chambre de rétractation 39.

Dans l'exemple décrit, chaque organe déflecteur 36 est donc configuré pour admettre plusieurs positions, dont la position de travail dans laquelle l'organe déflecteur 36 est déployé.

Dans sa configuration déployée, chaque organe déflecteur 36 forme une barrière dans l'espace d'écartement 22 et guide dans la cavité de récupération 37 respective les débris que peut comporter le fluide admis dans la chambre de transfert 18 et s'introduisant dans l'espace d'écartement 22.

Les dispositifs de protection 35 sont ainsi configurés de sorte que, lorsque le fluide admis dans la chambre de transfert 18 s'écoule vers l'espace d'écartement dans lequel sont logés les organes d'étanchéité dynamique 30, le fluide est guidé par les organes déflecteurs 36, en configuration déployée, directement dans les cavités de récupération respectives 37, de sorte à protéger les organes d'étanchéité dynamique 30 situés en aval des dispositifs de protection 35 dans l'espace d'écartement 22, des débris que peut comporter le fluide.

Au surplus, le dispositif de nettoyage 50 est configuré pour évacuer les débris qui sont guidés par les organes déflecteurs 36 et accumulés dans les cavités de récupération 37.

Le dispositif de nettoyage peut être pourvu de conduits 51 ménagés ici dans la deuxième partie annulaire 12 et qui débouchent dans les cavités de récupération 37 au niveau du l'espace d'écartement 22.

Les conduits 51 peuvent être agencés de sorte que les débris sont évacués par gravité.

Le dispositif de nettoyage 50 peut alternativement ou au surplus comporter un système d'aspiration externe (non représenté) aux première et deuxième parties annulaires 11 et 12 et raccordé à un ou plusieurs conduit 51.

Chaque organe déflecteur 36 est aussi configuré pour admettre la position de montage dans laquelle il est rétracté.

Dans sa configuration rétractée, chaque organe déflecteur 36 est logé en majeure partie dans le logement dédié 32 de la première partie annulaire 11 et le doigt 40 qu'il comporte se trouve donc à distance de la deuxième partie annulaire 12. Le doigt 40 n'obstrue donc pas l'espace d'écartement.

Les dispositifs de protection 35 sont ainsi configurés de sorte à faciliter l'assemblage du dispositif joint tournant 10. En effet, dans leur configuration déployée, les doigts 40 pourraient gêner l'assemblage des première et deuxième parties annulaires 11 et 12 ; tandis que dans leur configuration rétractée, les doigts 40 ne gênent pas l'assemblage des première et deuxième parties annulaires 11 et 12.

Dans la portion supérieure 23 du dispositif joint tournant 10 (figure 5), l'agencement des organes d'étanchéité dynamique 30 et du dispositif de protection 35 dans l'espace d'écartement 12 est ici très similaire à celui dans la portion inférieure 24.

L'organe d'étanchéité dynamique 30 est disposé dans un logement 31 formant un espace dédié, lequel logement 31 est ménagé par exemple ici dans la deuxième partie annulaire 12 et débouche dans l'espace d'écartement 22.

Chaque organe d'étanchéité dynamique 30 saille de la surface interne 26 de la deuxième partie annulaire 12 et vient en appui contre la surface externe 25 de la première partie annulaire 11, en traversant radialement l'espace d'écartement 22.

Le dispositif de protection 35 comporte un organe déflecteur 36 qui est disposé dans un logement 32 formant un espace dédié, lequel logement 32 est ménagé aussi ici dans la première partie annulaire 11 et débouche dans l'espace d'écartement 22.

Dans l'exemple décrit, le dispositif de protection 35 comporte en outre une cavité de récupération 37 ménagée ici dans la deuxième partie annulaire 12, du côté de sa surface interne 26, et qui débouche ainsi directement dans l'espace d'écartement 22.

La cavité de récupération 37 est ici située directement en face de l'organe déflecteur 36 et avant l'organe d'étanchéité dynamique 30.

L'organe déflecteur 36 s'étend ici dans l'espace d'écartement 22 entre la chambre de transfert 18 et l'organe d'étanchéité dynamique 30.

L'organe déflecteur et plus généralement le dispositif de protection ne saillent pas dans la chambre de transfert 18.

Du fait de la position supérieure de la portion supérieure 23 du dispositif joint tournant 10, les éventuels débris de fluide qui s'engageraient dans l'espace d'écartement 22 peuvent être retenus dans la cavité de récupération 37, mais ils devraient probablement retomber dans la chambre de transfert 18 du fait de la gravité intrinsèque à leur emplacement.

Dans l'exemple décrit, il n'y a donc pas de conduit de nettoyage pour le dispositif de protection situé dans la portion supérieure 23 du dispositif joint tournant 10.

L'organe déflecteur 36 est pourvu d'un corps 38 définissant une chambre de rétractation 39 et d'un doigt 40 qui est configuré pour être rétractable dans la chambre de rétractation 39 et déployable en saillie à l'intérieur de l'espace d'écartement 22 en direction de la surface interne 26 de la deuxième partie annulaire 12. L'organe déflecteur 36 est commandable, ici par le biais d'un organe de commande 41 relié à la chambre de rétractation 39, entre une configuration déployée dans laquelle il admet une position dite de travail et une configuration rétractée dans laquelle il admet une position dite de montage. L'organe de commande 41 peut par exemple être électrique, pneumatique ou bien hydraulique.

Le doigt 40 de l'organe déflecteur 36 peut présenter différentes formes, par exemple en fonction de la forme de la cavité de récupération 37.

En fonction de la forme du doigt 40, celui-ci peut être totalement ou seulement partiellement déployé dans l'espace d'écartement 22 et/ou rétracté dans la chambre de rétractation 39.

Dans l'exemple décrit, l'organe déflecteur 36 est donc configuré pour admettre plusieurs positions, dont la position de travail dans laquelle l'organe déflecteur 36 est déployé et la position de montage dans laquelle il est rétracté, ainsi qu'indiqué plus haut pour les organes déflecteurs de la portion inférieure 24 du dispositif joint tournant 10.

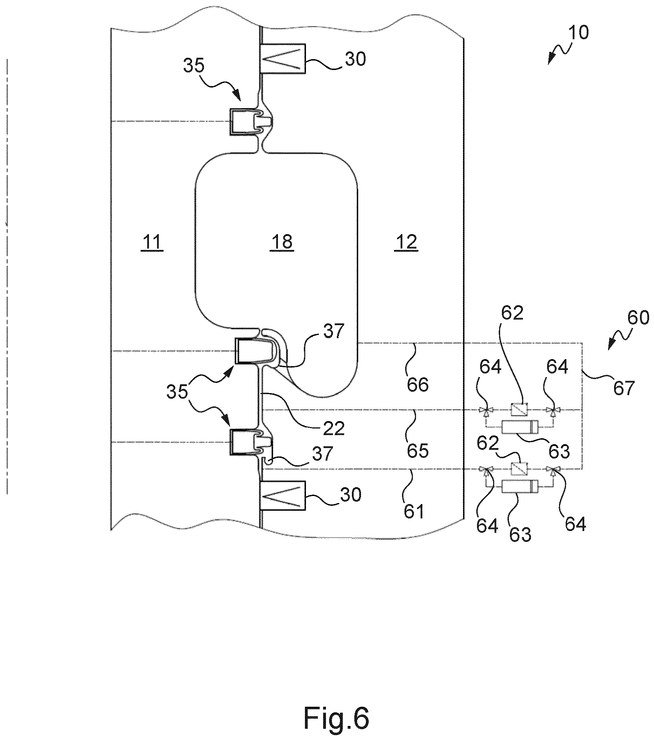

La figure 6 montre un dispositif d'équilibrage de pressions 60 dans le dispositif joint tournant 10.

Le dispositif d'équilibrage de pressions 60 est pourvu d'un réseau de conduits, dont un premier conduit 61 et un deuxième conduit 65 passant chacun par un filtre 62 et/ou par un échangeur à piston 63 au moyens de vannes dédiées 64 et débouchant respectivement dans l'espace d'écartement 22 entre un dispositif de protection 35 et un organe d'étanchéité 30, en aval de la cavité de récupération 37, et entre deux dispositifs de protection 35.

Le réseau de conduits comporte en outre un troisième conduit 66 débouchant directement dans la chambre de transfert 18 et raccordé aux premier conduit 61 et deuxième conduit 65 via un quatrième conduit 67 ; de sorte que les premier, deuxième et troisième conduits 61, 65 et 66 sont agencés en parallèle.

Un tel dispositif d'équilibrage de pressions 60 est configuré pour assurer l'équilibrage des pressions entre la chambre de pression 18 et l'espace d'écartement 22, lequel peut légèrement varier lors des opérations d'extraction du fluide.

Le dispositif joint tournant 10 tel que décrit ci-dessus permet d'assurer de manière simple et commode une protection des organes d'étanchéité dynamique 30 qu'il comporte dans son espace d'écartement 22.

En effet, c'est parce que les première et deuxième parties annulaires 11 et 12 sont mobiles en rotation entre elles qu'il est nécessaire de ménager l'espace d'écartement 22 et c'est du fait de cet espace qu'il est nécessaire d'étancher via des organes d'étanchéité dynamique 30. Or, les débris que peut comporter le fluide peuvent détériorer ces organes d'étanchéité dynamique 30 s'ils cheminent dans l'espace d'écartement 22 jusqu'à ces organes d'étanchéité dynamique 30.

L'agencement des dispositifs de protection 35, et en particulier des organes déflecteurs 36 et des cavités de récupération 37 associées à ces organes déflecteur 36, directement à l'intérieur de l'espace d'écartement 22, permet de former des barrières de protection dédiée aux organes d'étanchéité dynamique 30.

En d'autres termes, ces barrières de protection qui sont formées par les organes déflecteurs 36 et les cavités de récupération 37 associées obstruent seulement l'espace d'écartement 22, sans obstruer la chambre de transfert 18. Ces barrières de protection ne gênent donc pas l'écoulement du fluide dans la chambre de transfert 18 et au travers desdites première et deuxième parties annulaires 11 et 12.

Au surplus, l'agencement des dispositifs de protection 35 dans l'espace d'écartement 22 est particulièrement commode en ce qu'il n'influe pas sur l'assemblage du dispositif joint tournant 10.

Dans une variante non illustrée, le dispositif joint tournant est un joint dits multi-passages, comportant plusieurs chambres de transfert. Le cas échéant, le dispositif joint tournant peut comporter des dispositifs de protections et des organes d'étanchéités disposés entre les différentes chambres de transferts et/ou de part et d'autre de ces chambres.

D'autres variantes non illustrées sont présentées ci-après.

La première partie annulaire pourrait être mobile en rotation par rapport à la deuxième partie annulaire qui serait fixe, ou bien la première partie annulaire pourrait être mobile en rotation par rapport à la deuxième partie annulaire qui serait elle aussi mobile en rotation par rapport à la première partie annulaire.

Au moins une des cavités de récupération peut être formée dans la première partie annulaire plutôt que dans la deuxième partie annulaire et au moins des organes déflecteurs peut s'étendre depuis la deuxième partie annulaire plutôt que depuis la première partie annulaire.

Au moins une des cavités de récupération peut être formée dans les deux première et deuxième parties annulaires.

Le dispositif joint tournant comporte plus ou moins de trois organes d'étanchéité dynamique logés dans sa portion supérieure et/ou plus ou moins de trois organes d'étanchéité dynamique logés dans sa portion inférieure.

Le dispositif joint tournant comporte plus ou moins d'un dispositif de protection logé dans sa portion supérieure et/ou plus ou moins de deux dispositifs de protection logés dans sa portion inférieure.

Un dispositif de protection peut comporter un ou plusieurs organes déflecteurs et/ou une ou plusieurs cavités de récupération.

La cavité de récupération peut être formée dans la première partie annulaire et l'organe déflecteur peut s'étendre depuis la deuxième partie annulaire ; et optionnellement une autre cavité de récupération peut être formée dans la deuxième partie annulaire et un autre organe déflecteur peut s'étendre depuis la première partie annulaire.

L'organe déflecteur peut être formé par une languette flexible plutôt que par un doigt, laquelle languette peut admettre plusieurs positions, dont une position de montage et une position de travail.

L'organe déflecteur peut ne pas être commandé et donc ne pas admettre de position de montage.

Plus généralement, l'invention ne se limite pas aux exemples décrits et représentés, mais elle est définie par les revendications.

## Revendications

1. Dispositif joint tournant configuré pour équiper une installation d'exploitation de fluides (1), par exemple un hydrocarbure et notamment sur une plateforme offshore, comportant une première partie annulaire (11), une deuxième partie annulaire (12) mobile en rotation par rapport à ladite première partie annulaire, au moins une chambre de transfert (18) au moins partiellement ménagée dans ladite première partie annulaire et/ou dans ladite deuxième partie annulaire pour permettre le transfert dudit fluide au travers dudit dispositif joint tournant (10), au moins un espace d'écartement (22) situé entre ladite première partie annulaire et ladite deuxième partie annulaire et débouchant dans ladite au moins une chambre de transfert, ledit au moins un espace d'écartement étant prévu pour permettre la rotation desdites première et deuxième parties annulaires entre elles, au moins un organe d'étanchéité dynamique (30) logé au moins partiellement à l'intérieur dudit au moins un espace d'écartement et prévu pour l'étancher, ainsi qu'un dispositif de protection (35) dudit au moins un organe d'étanchéité dynamique ; **caractérisé en ce que** ledit dispositif de protection comporte au moins un organe déflecteur (36) logé au moins partiellement dans ledit au moins un espace d'écartement (22) et au moins une cavité de récupération (37) ménagée dans au moins l'une desdites première et deuxième parties annulaires (11, 12) et débouchant dans ledit au moins un espace d'écartement (22), ledit dispositif de protection (35) étant configuré de sorte que, lorsque ledit fluide admis dans ladite au moins une chambre de transfert (18) s'écoule vers ledit au moins un espace d'écartement (22) dans lequel est logé ledit au moins un organe d'étanchéité dynamique (30), ledit fluide est guidé par ledit au moins un organe déflecteur (36) directement dans ladite au moins une cavité de récupération (37) pour protéger ledit au moins un organe d'étanchéité dynamique (30) de débris que peut comporter ledit fluide.

2. Dispositif joint tournant selon la revendication 1, **caractérisé en ce que** ladite au moins une cavité de récupération (37) est située immédiatement après ledit au moins un organe déflecteur (36) et avant ledit au moins un organe d'étanchéité dynamique (30).

3. Dispositif joint tournant selon l'une des revendications 1 et 2, **caractérisé en ce que** ledit au moins un organe déflecteur (36) s'étend dans ledit au moins un espace d'écartement (22) entre ladite au moins une chambre de transfert (18) et ledit au moins un organe d'étanchéité dynamique (30).

4. Dispositif joint tournant selon l'une quelconque des revendications 1 à 3, **caractérisé en ce que** ladite au moins une cavité de récupération (37) est formée dans l'une desdites première et deuxième parties annulaires (11, 12) et ledit au moins un organe déflecteur (36) s'étend depuis l'autre desdites première et deuxième parties annulaires (11, 12).

5. Dispositif joint tournant selon l'une quelconque des revendications 1 à 4, **caractérisé en ce qu'**il comporte un dispositif de nettoyage (50) configuré pour évacuer des débris que peut comporter ledit fluide et qui sont guidés par ledit au moins un organe déflecteur (36) et accumulés dans ladite au moins une cavité de récupération (37).

6. Dispositif joint tournant selon la revendication 5, **caractérisé en ce que** ledit dispositif de nettoyage (50) est pourvu d'au moins un conduit (51) ménagé dans l'une desdites première et deuxième parties annulaires (11, 12) et débouchant dans ladite au moins une cavité de récupération (37) au niveau dudit au moins un espace d'écartement (22), ledit au moins un conduit étant agencé de sorte que lesdits débris sont évacués par gravité et/ou ledit dispositif de nettoyage comporte en outre un système d'aspiration externe auxdites première et deuxième parties annulaires et raccordé audit au moins un conduit.

7. Dispositif joint tournant selon l'une quelconque des revendications 1 à 6, **caractérisé en ce que** ledit au moins un organe déflecteur (36) est pourvu d'un doigt (40) saillant à l'intérieur dudit au moins un espace d'écartement (22) et/ou d'une languette flexible.

8. Dispositif joint tournant selon l'une quelconque des revendications 1 à 7, **caractérisé en ce que** ledit au moins un organe déflecteur (36) est configuré pour admettre plusieurs positions, dont une position de travail dans laquelle ledit au moins un organe déflecteur forme une barrière dans ledit au moins un espace d'écartement (22) et guide lesdits débris que peut comporter ledit fluide dans ladite au moins une cavité de récupération (37), ainsi qu'une position de montage dans laquelle ledit au moins un organe déflecteur est à proximité immédiate de l'une desdites première et deuxième parties annulaires (11, 12) et à distance de l'autre desdites première et deuxième parties annulaires (11, 12), n'obstruant ainsi pas ledit au moins un espace d'écartement (22).

9. Dispositif joint tournant selon la revendication 8, **caractérisé en ce que** ledit au moins un organe déflecteur (36) est commandable entre une configuration déployée dans laquelle il admet ladite position de travail et une configuration rétractée dans laquelle il admet ladite position de montage.

10. Dispositif joint tournant selon l'une quelconque des revendications 1 à 9, **caractérisé en ce qu'**il comporte un dispositif d'équilibrage de pressions (60) configuré pour assurer un équilibrage de pressions entre ladite au moins une chambre de transfert (18) et ledit espace d'écartement (22), ledit dispositif d'équilibrage de pressions (60) étant pourvu d'un réseau de conduits, dont au moins un conduit (61, 65) passant par un filtre (62) et/ou par un échangeur à piston (63) au moyens d'au moins une vanne dédiée (64) et débouchant dans ledit espace d'écartement (22) entre ledit dispositif de protection (35) et ledit au moins un organe d'étanchéité (30), en aval de ladite cavité de récupération (37).

11. Installation d'exploitation de fluides, par exemple un hydrocarbure et notamment sur une plateforme offshore, comportant au moins un dispositif joint tournant (10) selon l'une quelconque des revendications 1 à 10, avec ladite première partie annulaire (11) dudit dispositif joint tournant qui est assujettie à une tourelle d'amarrage (4) fixe de ladite installation (1) et ladite deuxième partie annulaire (12) dudit dispositif joint tournant qui est assujettie à un navire (3) mobile de ladite installation.

## Patentansprüche

1. Drehgelenkvorrichtung, die dafür konfiguriert ist, eine Anlage zur Förderung von Fluiden (1) auszurüsten, zum Beispiel eines Kohlenwasserstoffs und insbesondere auf einer Offshore-Plattform, einen ersten ringförmigen Teil (11), einen zweiten ringförmigen Teil (12), der in Bezug auf den ersten ringförmigen Teil drehbeweglich ist, mindestens eine Transferkammer (18), die mindestens teilweise in dem ersten ringförmigen Teil und/oder in dem zweiten ringförmigen Teil ausgebildet ist, um den Transfer des Fluids durch die Drehgelenkvorrichtung (10) zu ermöglichen, mindestens einen Abstandsraum (22), der sich zwischen dem ersten ringförmigen Teil und dem zweiten ringförmigen Teil befindet und in die mindestens eine Transferkammer mündet, wobei der mindestens eine Abstandsraum dafür vorgesehen ist, das Drehen des ersten und des zweiten ringförmigen Teils untereinander zu ermöglichen, mindestens ein dynamisches Dichtungselement (30), das mindestens teilweise im Inneren des mindestens einen Abstandsraums untergebracht und dafür vorgesehen ist, diesen abzudichten, sowie eine Vorrichtung zum Schutz (35) des mindestens einen dynamischen Dichtungselements umfassend; **dadurch gekennzeichnet, dass** die Schutzvorrichtung mindestens ein Ablenkelement (36), das mindestens teilweise in dem mindestens einen Abstandsraum (22) untergebracht ist, und mindestens einen Auffanghohlraum (37) umfasst, der in mindestens einem des ersten und des zweiten ringförmigen Teils (11, 12) ausgebildet ist und in den mindestens einen Abstandsraum (22) mündet, wobei die Schutzvorrichtung (35) so konfiguriert ist, dass, wenn das in die mindestens eine Transferkammer (18) eingelassene Fluid zu dem mindestens einen Abstandsraum (22) strömt, in dem das mindestens eine dynamische Dichtungselement (30) untergebracht ist, das Fluid von dem mindestens einen Ablenkelement (36) direkt in den mindestens einen Auffanghohlraum (37) geleitet wird, um das mindestens eine dynamische Dichtungselement (30) vor Schmutz, den das Fluid umfassen kann, zu schützen.

2. Drehgelenkvorrichtung nach Anspruch 1, **dadurch gekennzeichnet, dass** sich der mindestens eine Auffanghohlraum (37) unmittelbar hinter dem mindestens einen Ablenkelement (36) und vor dem mindestens einen dynamischen Dichtungselement (30) befindet.

3. Drehgelenkvorrichtung nach einem der Ansprüche 1 und 2, **dadurch gekennzeichnet, dass** sich das mindestens eine Ablenkelement (36) in dem mindestens einen Abstandsraum (22) zwischen der mindestens einen Transferkammer (18) und dem mindestens einen dynamischen Dichtungselement (30) erstreckt.

4. Drehgelenkvorrichtung nach einem der Ansprüche 1 bis 3, **dadurch gekennzeichnet, dass** der mindestens eine Auffanghohlraum (37) in einem des ersten und des zweiten ringförmigen Teils (11, 12) gebildet ist und das mindestens eine Ablenkelement (36) sich von dem anderen des ersten und des zweiten ringförmigen Teils (11, 12) erstreckt.

5. Drehgelenkvorrichtung nach einem der Ansprüche 1 bis 4, **dadurch gekennzeichnet, dass** sie eine Reinigungsvorrichtung (50) umfasst, die dafür konfiguriert ist, Schmutz, den das Fluid umfassen kann und der von dem mindestens einen Ablenkelement (36) geleitet wird und sich in dem mindestens einen Auffanghohlraum (37) ansammelt, auszutragen.

6. Drehgelenkvorrichtung nach Anspruch 5, **dadurch gekennzeichnet, dass** die Reinigungsvorrichtung (50) mit mindestens einer Leitung (51) versehen ist, die in einem des ersten und des zweiten ringförmigen Teils (11, 12) ausgebildet ist und im Bereich des mindestens einen Abstandsraums (22) in den mindestens einen Auffanghohlraum (37) mündet, wobei die mindestens eine Leitung so eingerichtet ist, dass der Schmutz durch Schwerkraft ausgetragen wird, und/oder die Reinigungsvorrichtung weiter ein Absaugsystem umfasst, das außerhalb des ersten und des zweiten ringförmigen Teils liegt und mit der mindestens einen Leitung verbunden ist.

7. Drehgelenkvorrichtung nach einem der Ansprüche 1 bis 6, **dadurch gekennzeichnet, dass** das mindestens eine Ablenkelement (36) mit einem Finger (40), der im Inneren des mindestens einen Abstandsraums (22) vorspringt, und/oder mit einer biegsamen Zunge versehen ist.

8. Drehgelenkvorrichtung nach einem der Ansprüche 1 bis 7, **dadurch gekennzeichnet, dass** das mindestens eine Ablenkelement (36) dafür konfiguriert ist, mehrere Positionen zuzulassen, darunter eine Arbeitsposition, in der das mindestens eine Ablenkelement eine Barriere in dem mindestens einen Abstandsraum (22) bildet und den Schmutz, den das Fluid umfassen kann, in den mindestens einen Auffanghohlraum (37) leitet, sowie eine Montageposition, in der sich das mindestens eine Ablenkelement in unmittelbarer Nähe eines des ersten und des zweiten ringförmigen Teils (11, 12) und in Abstand vom anderen des ersten und des zweiten ringförmigen Teils (11, 12) befindet, wodurch es den mindestens einen Abstandsraum (22) nicht versperrt.

9. Drehgelenkvorrichtung nach Anspruch 8, **dadurch gekennzeichnet, dass** das mindestens eine Ablenkelement (36) zwischen einer ausgefahrenen Konfiguration, in der es die Arbeitsposition zulässt, und einer eingefahrenen Konfiguration, in der es die Montageposition zulässt, gesteuert werden kann.

10. Drehgelenkvorrichtung nach einem der Ansprüche 1 bis 9, **dadurch gekennzeichnet, dass** sie eine Druckausgleichsvorrichtung (60) umfasst, die dafür konfiguriert ist, einen Druckausgleich zwischen der mindestens einen Transferkammer (18) und dem Abstandsraum (22) sicherzustellen, wobei die Druckausgleichsvorrichtung (60) mit einem Leitungsnetz versehen ist, von dem mindestens eine Leitung (61, 65) durch einen Filter (62) und/oder mittels mindestens eines dedizierten Ventils (64) durch einen Kolbentauscher (63) verläuft und zwischen der Schutzvorrichtung (35) und dem mindestens einen Dichtungselement (30) stromabwärts des Auffanghohlraums (37) in den Abstandsraum (22) mündet.

11. Anlage zur Förderung von Fluiden, zum Beispiel eines Kohlenwasserstoffs, und insbesondere auf einer Offshore-Plattform, die mindestens eine Drehgelenkvorrichtung (10) nach einem der Ansprüche 1 bis 10 umfasst, wobei der erste ringförmige Teil (11) der Drehgelenkvorrichtung an einem festen Verankerungsturm (4) der Anlage (1) festgemacht ist und der zweite ringförmige Teil (12) der Drehgelenkvorrichtung an einem beweglichen Schiff (3) der Anlage festgemacht ist.

## Claims

1. Rotary joint device configured to equip an installation for exploiting fluids (1), for example a hydrocarbon and in particular on an offshore platform, including a first annular part (11), a second annular part (12) rotatably movable in relation to said first annular part, at least one transfer chamber (18) at least partially arranged in said first annular part and/or in said second annular part to make it possible to transfer said fluid through said rotary joint device (10), at least one gap space (22) located between said first annular part and said second annular part and opening into said at least one transfer chamber, said at least one gap space being provided to make it possible to mutually rotate said first and second annular parts, at least one dynamic sealing member (30) housed at least partially inside said at least one gap space and provided to seal it, as well as a device for protecting (35) said at least one dynamic sealing member; **characterised in that** said protection device includes at least one deflector member (36) housed at least partially in said at least one gap space (22) and at least one recovery cavity (37) arranged in at least one of said first and second annular parts (11, 12) and opening into said at least one gap space (22), said protection device (35) being configured so that, when said fluid admitted in said at least one transfer chamber (18) flows towards said at least one gap space (22) wherein said at least one dynamic sealing member (30) is housed, said fluid is guided by said at least one deflector member (36) directly into said at least one recovery cavity (37) to protect said at least one dynamic sealing member (30) from debris that said fluid may comprise.

2. Rotary joint device according to claim 1, **characterised in that** said at least one recovery cavity (37) is located immediately after said at least one deflector member (36) and before said at least one dynamic sealing member (30).

3. Rotary joint device according to one of claims 1 and 2, **characterised in that** said at least one deflector member (36) extends in said at least one gap space (22) between said at least one transfer chamber (18) and said at least one dynamic sealing member (30).

4. Rotary joint device according to any one of claims 1 to 3, **characterised in that** said at least one recovery cavity (37) is formed in one of said first and second annular parts (11, 12) and said at least one deflector member (36) extends from the other of said first and second annular parts (11, 12).

5. Rotary joint device according to any one of claims 1 to 4, **characterised in that** it includes a cleaning device (50) configured to remove debris that said fluid may include and that is guided by said at least one deflector member (36) and accumulated in said at least one recovery cavity (37).

6. Rotary joint device according to claim 5, **characterised in that** said cleaning device (50) is provided with at least one pipe (51) arranged in one of said first and second annular parts (11, 12) and opening into said at least one recovery cavity (37) at said at least one gap space (22), said at least one pipe being arranged so that said debris is removed by gravity and/or said cleaning device further includes a suction system external to said first and second annular parts and connected to said at least one pipe.

7. Rotary joint device according to any one of claims 1 to 6, **characterised in that** said at least one deflector member (36) is provided with a finger (40) protruding inside said at least one gap space (22) and/or with a flexible tongue.

8. Rotary joint device according to any one of claims 1 to 7, **characterised in that** said at least one deflector member (36) is configured to allow a plurality of positions, of which a working position wherein said at least one deflector member forms a barrier in said at least one gap space (22) and guides said debris that said fluid may include into said at least one recovery cavity (37), as well as a mounting position wherein said at least one deflector member is within the immediate vicinity of one of said first and second annular parts (11, 12) and at a distance from the other of said first and second annular parts (11, 12), thus not obstructing said at least one gap space (22).

9. Rotary joint device according to claim 8, **characterised in that** said at least one deflector member (36) can be controlled between a deployed configuration wherein it allows said working position and a retracted configuration wherein it allows said mounting position.

10. Rotary joint device according to any one of claims 1 to 9, **characterised in that** it includes a pressure balancing device (60) configured to ensure a balancing of pressures between said at least one transfer chamber (18) and said gap space (22), said pressure balancing device (60) being provided with a network of pipes, of which at least one pipe (61, 65) passing through a filter (62) and/or through a piston exchanger (63) by means of at least one dedicated valve (64) and opening into said gap space (22) between said protection device (35) and said at least one sealing member (30), downstream of said recovery cavity (37).

11. Installation for exploiting fluids, for example a hydrocarbon and in particular on an offshore platform, including at least one rotary joint device (10) according to any one of claims 1 to 10, with said first annular part (11) of said rotary joint device that is attached to a fixed mooring turret (4) of said installation (1) and said second annular part (12) of said rotary joint device that is attached to a movable ship (3) of said installation.
